# EUROPEAN PATENT SPECIFICATION

(11) **EP 3 276 929 B1**
(45) Date of publication and mention of the grant of the patent: **03.07.2019**
(21) Application number: 17181864.4
(22) Date of filing: 18.07.2017
(51) Int. Cl.: H04M 3/48

(54) **METHOD AND DEVICE FOR OBTAINING A CALL RECORD**
VERFAHREN UND VORRICHTUNG ZUM ERHALT EINES ANRUFPROTOKOLLS
PROCÉDÉ ET DISPOSITIF PERMETTANT D'OBTENIR UN ENREGISTREMENT D'APPELS

(30) Priority: 28.07.2016 CN 201610608625
(43) Date of publication of application: 31.01.2018
(73) Proprietor: Beijing Xiaomi Mobile Software Co., Ltd., Beijing 100085 (CN)
(72) Inventor: ZHU, Ruixian, Beijing, 100085 (CN); WANG, Shuo, Beijing, 100085 (CN); PAN, Long, Beijing, 100085 (CN)
(74) Representative: Underwood, Nicolas Patrick

(56) References cited:
- CN-A- 103 281 464
- US-A1- 2007 133 771

## Description

### TECHNICAL FIELD

The present invention generally relates to the technical field of smart terminals, and more particularly, to a method and a device for obtaining a call record.

### BACKGROUND

Currently, with the development of smart phone technologies, mobile phones have become a very important part of people's life, and phone calls have become one of the main communication medium between people. Due to limited battery capacity, smartphones often encounter the problem of running out of power. If a mobile phone runs out of power or is shut down, the mobile phone cannot receive calls, and thus some important calls may be missed. As a result, a user cannot know in time whether someone has called him or her during the shutdown or in other conditions under which the user is not available. Documents US 2007/133771 and CN 103 281 464 disclose known methods for obtaining call records.

### SUMMARY

Embodiments of the present invention provide a method and a device for obtaining a call record. The technical solutions are as follows.

According to a first aspect of embodiments, the invention relates to a method for obtaining a call record as defined in claim 1.

In a particular embodiment, a missed call record is a call record which indicates that a call has been received on a mobile terminal but this call record has not been saved in the mobile terminal.

In other words, a missed call record is a record of a missed call, a missed call being a call directed to a mobile terminal but for which no call record has been saved in the mobile terminal.

In a particular embodiment, obtaining the missed call record further comprises any one of:
obtaining the missed call record from contents of a received short message; and
obtaining the missed call record from an operator.

In a particular embodiment, obtaining the missed call record from the server comprises:
obtaining outgoing call records of a calling party from the server;
obtaining, from the outgoing call records of the calling party, an outgoing call record which indicates an outgoing call from the calling party to the terminal; and
obtaining the outgoing call record which indicates the outgoing call from the calling party to the terminal as the missed call record.

In a particular embodiment, obtaining the missed call record from the contents of the received short message comprises:
obtaining contents of the received short message in a predefined format; and
obtaining the missed call record from the contents of the short message in the predefined format.

In a particular embodiment, obtaining the missed call record from the contents of the received short message comprises:
obtaining the missed call record from a short message notification received from an operator.

In a particular embodiment, after the missed call record is inserted into call records of the mobile terminal, the method further comprises:
notifying a user of the missed call record.

According to a second aspect of embodiments, the invention relates to a device for obtaining a call record as defined in claim 7.

In a particular embodiment, the obtaining module further comprises any one of:
a second obtaining sub-module configured to obtain the missed call record from contents of a received short message; and
a third obtaining sub-module configured to obtain the missed call record from an operator.

In a particular embodiment, the first obtaining sub-module comprises:
an outgoing record obtaining sub-module configured to obtain outgoing call records of a calling party from the server; and
an incoming record obtaining sub-module configured to obtain, from the outgoing call records of the calling party, an outgoing call record which indicates an outgoing call from the calling party to the terminal; and
a conversion sub-module configured to obtain the outgoing call record which indicates the outgoing call from the calling party to the terminal as the missed call record.

In a particular embodiment, the second obtaining sub-module comprises:
a short message obtaining sub-module configured to obtain contents of the received short message in a predefined format; and
an incoming record matching sub-module configured to obtain the missed call record from the contents of the short message in the predefined format.

In a particular embodiment, the second obtaining sub-module comprises:
an operator record obtaining sub-module configured to obtain the missed call record from a short message notification received from an operator.

In a particular embodiment, the insertion module further comprises:
a notification sub-module configured to notify a user of the missed call.

According to a fourth aspect of embodiments, the invention relates to a computer program which, when being executed on a processor of a mobile terminal, performs any one of the above methods.

According to a fifth aspect of embodiments, the invention relates to a non-transitory computer-readable storage medium having stored therein instructions that, when executed by a processor of a device, causes the device to perform the method for obtaining a call record according to the first aspect of the present invention.

The technical solutions provided by embodiments of the present invention may have the following advantageous effects.

In the above technical solutions, after a mobile phone is restarted, a missed call record is obtained first, and then the obtained missed call record is inserted into call records of the mobile phone so as to complement the call records of the mobile phone. In this way, users can be closely informed about whether there is a missed call. Using the technical solutions of the present invention, users can know in time whether there is an incoming call record during shutdown or other conditions that the users are not available, thereby avoiding missing of important calls. The technical solutions of the present invention intelligently insert the missed call record into the existing call records (call history) of the mobile phone, and thus user experience can be improved.

It is to be understood that both the foregoing general description and the following detailed description are exemplary only and are not restrictive of the present invention.

### BRIEF DESCRIPTION OF THE DRAWINGS

The accompanying drawings, which are incorporated in and constitute a part of this specification, illustrate embodiments consistent with the present invention and, together with the description, serve to explain the principles of the present invention.
Fig. 1 is a flowchart showing a method for obtaining a call record according to an exemplary embodiment.
Fig. 2 is a flowchart showing another method for obtaining a call record according to an exemplary embodiment.
Fig. 3 is a flowchart showing another method for obtaining a call record according to an exemplary embodiment.
Fig. 4 is a block diagram showing a device for obtaining a call record according to an exemplary embodiment.
Fig. 5 is a block diagram for a device for obtaining a call record according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of devices and methods consistent with aspects related to the present invention as recited in the appended claims.

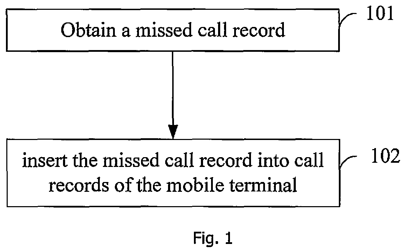

Fig. 1 is a flowchart showing a method for obtaining a call record according to an exemplary embodiment. The method for obtaining a call record can be performed by a mobile terminal, and may comprise the following steps 101 to 102.

In step 101, a missed call record is obtained.

In step 102, the missed call record is inserted into call records of the mobile terminal.

In conventional technology, if the mobile phone of a user is in a shutdown state, the user cannot know whether there is an incoming call during the shutdown or during other conditions under which the user is not available, unless the user uses information of telecom operators. Also, conventional technologies cannot automatically insert call-in information into the call records of the mobile phone of the user. This brings many inconveniences to the user. However, by using the technical solutions of the present invention, after the user restarts the mobile phone, the mobile phone automatically obtains one or more records about incoming calls which happened during the shutdown or during other conditions under which the user is not available, and automatically inserts these obtained records into the existing call records of the mobile phone, thereby bringing conveniences to the user.

In a particular embodiment, after a mobile terminal is connected to an operator's network, the mobile terminal automatically obtains one or more missed call records. The missed call records can be obtained in many ways. For example, the missed call records can be intelligently obtained according to network connection information of mobile terminals which initiate calls or by parsing contents of short messages. For example, there might be a situation during which, if a mobile terminal is not available, the calling part (i.e. the call issuer) may send a short message: "I have called you right now but you are not available, please call me back after seeing the short message". After receiving such kind of short messages, the called mobile terminal can intelligently identify the semantic contents in the short message by matching the short message against a pre-stored template, and then determine that the called terminal has a missed call record.

In a particular embodiment, a missed call record refers to a call record which indicates a call initiated by a calling part but which is not saved in the mobile terminal. For example, if a mobile terminal is shut down and a calling part calls the mobile terminal at this time, then the mobile terminal is not available. As another example, if a mobile terminal is at a position where there is no telephone signal, no call can be received by the mobile terminal. Or, because of defects of the Android system, if a mobile terminal receives a call and then it is shut down immediately, the call record cannot be saved.

In a particular embodiment, one or more missed call records can be obtained from a server. If a calling party calls a mobile terminal when the mobile terminal is shut down or is not available, the call cannot be received by the mobile terminal, and the call record can be synchronized to call records associated with the mobile terminal on a cloud end server. After the mobile terminal is restarted or re-obtains operator's network signals, the mobile terminal can directly obtain the call record from the cloud end server and insert the obtained call record into the call records of the mobile terminal.

In a particular embodiment, obtaining the missed call from the server may comprise: obtaining outgoing call records of a calling party from the server; obtaining, from the outgoing call records of the calling party, an outgoing call record which indicates an outgoing call from the calling party to the terminal; and obtaining the outgoing call record which indicates the outgoing call from the calling party to the terminal as the missed call record. For example, a database associated with each network user can be established in the server to store call records of every user. For users each of whom is a contact of one another, they can obtain call records associated with themselves (indicating calls emitted or received by them) from the call records of their contacts without authorization of their contacts. For example, a user A is a contact of a user B, and the user B is also a contact of the user A. If the user B initiates a call to the user A on his/her own initiative while the mobile terminal of the user A is shut down, the user B cannot be connected to the user A because the mobile terminal of the user A is in a shutdown state. At this time, if the user B is in a network-connected state, the user B can directly synchronize the call record to the server. After the mobile terminal of the user A is restarted, the mobile terminal can directly obtain from the server this call record which indicates the call from the user B, and insert the obtained call record into the call records of the mobile terminal as the incoming call record of the mobile terminal itself.

In a particular embodiment, one or more missed call records can be obtained from contents of a received short message. In some situations, some operators may notify users of missed calls using short messages. In some other situations, settings can be made so that if a calling party calls a mobile terminal but the called terminal is not available, a short message can be sent to the mobile terminal to notify the user of the mobile terminal about the call record.

In a particular embodiment, obtaining the missed call record from the contents of the received short message may comprise: obtaining contents of the received short message in a predefined format; and obtaining the missed call record from the contents of the short message in the predefined format. In the embodiment, for example, a user B calls a user A. If the user A is not available because the mobile terminal of the user A is in an offline state or in a shutdown state, the terminal of the user B can automatically generate and send short message contents in a predefined format to the user A to notify the user A of the time when the user B calls the user A. After the mobile terminal of the user A is restarted or is on line again, the mobile terminal of the user A receives from the user B the short message notification in the predefined format, and obtains the missed call record from the received message notification. Because the format of the short message contents is fixed, after the mobile terminal of the user A receives the short message in the predefined format, the user A can know that the short message is used for notifying the missed call record, and the mobile terminal of the user A can obtain the information about the incoming call record from the short message contents by matching the received short message against a predetermined template.

In a particular embodiment, obtaining the missed call record from the contents of the received short message may comprise: obtaining the missed call record from a short message notification received from an operator. Some operators may provide services for notifying users of missed call records using short messages. The format and sender of such kind of short messages are usually fixed, and thus if a mobile terminal receives such kind of short message from the operators, the mobile terminal can obtain the missed call record by matching the received short messages against a pre-stored template. In some other embodiments, some operators may provide API, and the records of calls which are missed by users can be obtained using the API.

In a particular embodiment, one or more missed call records can be obtained directly from an operator. If there is a cooperation relationship between the manufacture of a mobile terminal and an operator, or if the operator provides such service, the mobile terminal can directly obtain the call records from the operator, and synchronize the records to the mobile terminal. For example, the operator can record all call records associated with users, comprising call records when mobile terminals of users are in a shutdown state or in an offline state, and if the mobile terminals of users are restarted or are on line again, the call records associated with the users can be synchronized to the mobile terminals of the users.

In a particular embodiment, obtaining the missed call record may comprise one or more of: obtaining the missed call record from a server; obtaining the missed call record from contents of a received short message; and obtaining the missed call record from an operator. These three manners for obtaining the missed call record can be performed under different situations. Obtaining the missed call record from a server is suitable for a situation where the called mobile terminal and the mobile terminal of the calling party (i.e. call issuer) can be connected to networks. If the called terminal mobile or the mobile terminal of the calling party is not connected to networks, the second manner can be used, i.e., the missed call record can be obtained from contents of a received short message. For users who can directly obtain call records from an operator, the third manner can be used, i.e., the missed call record can be obtained from the operator. Rather, any two or more of the above three manners can be used at the same time depending on different situations in which the called mobile terminal and the calling party are. If any two or more of the three manners are used, the manner having the highest priority can be used according to priority settings, or three or two manners can be used at the same time and duplicates of call records can be deleted after the call records are obtained.

In a particular embodiment, inserting the missed call record into call records of the mobile terminal may comprise: inserting the obtained missed call record into the call records of the mobile terminal according to a call time of the missed call; and deleting duplicates in the call records of the mobile terminal. After obtaining the missed call record, the mobile terminal can automatically insert the obtained call record into the call records of the mobile terminal according to the call time of the missed call. If the call records are obtained using several manners, there might be duplicates in the call records, and the duplicates can be deleted after the missed call record is inserted into the call records of the mobile terminal.

In a particular embodiment, after the missed call record is inserted into call records of the mobile terminal, the method further comprises: notifying a user of the missed call record. After automatically inserting the missed call record into call records of the mobile terminal, the mobile terminal can notify the user of the missed call record. For example, a missed call can be shown on a screen of mobile terminal, and the call time and the calling party of the missed call can be shown. The user can select to call the calling party or ignore the call record after seeing the notification.

In a particular embodiment, the above methods can be performed after the mobile terminal of the user is restarted or the state of the mobile terminal is changed from an offline state to an online state. Rather, the above methods can be performed at a time designated by the user.

The technical solutions of the present invention will be described below with reference to specific embodiments.

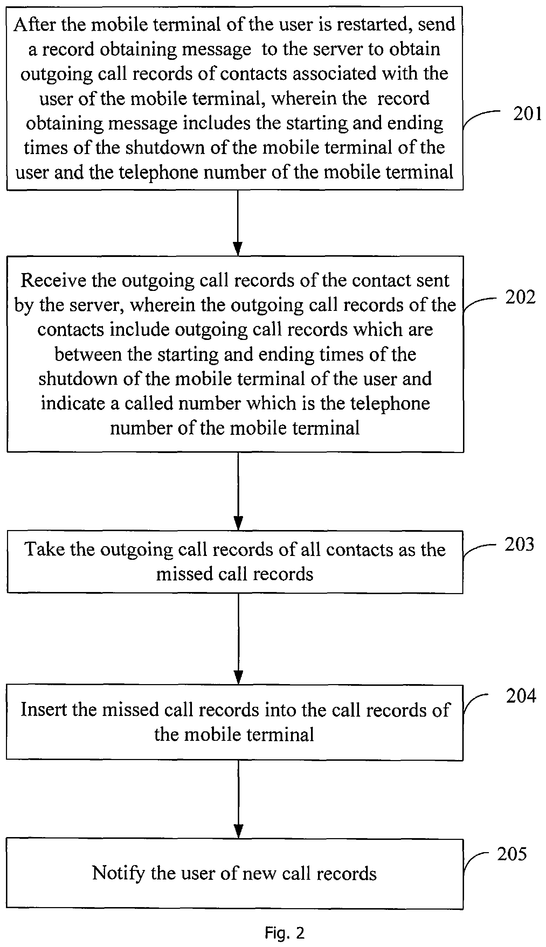

In a particular embodiment, descriptions will be made using an example that the missed call record is obtained from a server. For example, a user A calls a user B, but the user B does not receive the call because the mobile terminal of the user B is shut down or because of some other reasons. The cloud service used by the user A and the user B can save call records, and thus the record of the call from the user A to the user B is saved in the cloud data associated with the user A. The call record which indicates the call from the user A to the user B but is not successfully saved by the mobile terminal of the user B can be obtained from the cloud data and sent to the user B to complement the call records of the user B. Fig. 2 is a flowchart showing a method for obtaining a call record according to another exemplary embodiment
In step 201, after the mobile terminal of the user is restarted, a record obtaining message is sent to the server to obtain outgoing call records of contacts associated with the user of the mobile terminal. The record obtaining message comprises the starting and ending times of the shutdown of the mobile terminal of the user and the telephone number of the mobile terminal.

In step 202, the outgoing call records of the contact sent by the server are received. The outgoing call records of the contacts comprise outgoing call records which are between the starting and ending times of the shutdown of the mobile terminal of the user and indicate a called number which is the telephone number of the mobile terminal.

In step 203, the outgoing call records of all contacts are taken as the missed call records.

In step 204, the missed call records are inserted into the call records of the mobile terminal.

In step 205, the mobile terminal may notify the user of new call records.

In the embodiment, after the mobile terminal of the user is restarted, the mobile terminal of the user obtains the outgoing call records of contacts associated with the user of the mobile terminal from the server. The outgoing call records comprise all outgoing call records which indicate a called number which is the telephone number of the mobile terminal during the shutdown of the mobile terminal. After obtaining the outgoing call records, the records are converted as the incoming call records of the mobile terminal, and then the records are inserted into the call records of the mobile terminal. At the same time, the mobile terminal notifies the user of missed calls. The method automatically inserts the missed call records which indicate calls missed during the shutdown into the call records of the mobile terminal and notify the user of the missed calls. Thus, missing of important calls can be avoided, and thereby user experience can be improved.

In another embodiment, description will be made using an example that a contact automatically sends a short message which indicates a missed call to the mobile terminal of a user. For example, China Mobile provides a call reminder service, the cost of which is 3 RMB per month. Using such service, short messages are sent to notify users of missed calls. The "call reminder" service refers to a service provided for a called user to notify the missed calls. If a called user is busy, or the mobile terminal of the called user is shut down or not available, the call from the calling party is connected to a missed call service system, and according to the identity of the calling party and the selection of the calling party, the call information can be sent to the called party when the called party is available. This can ensure that the information of the calls between the calling and called parties are not missed, and thus provide improved user experience. Three operators, comprising China Mobile, China Telecom, and China Unicom, all provide the call reminder service. The China Mobile calls the service as the call reminder service. The China Telecom calls the service as a missed call reminder service. The China Unicom calls the service as a communication assistance service.

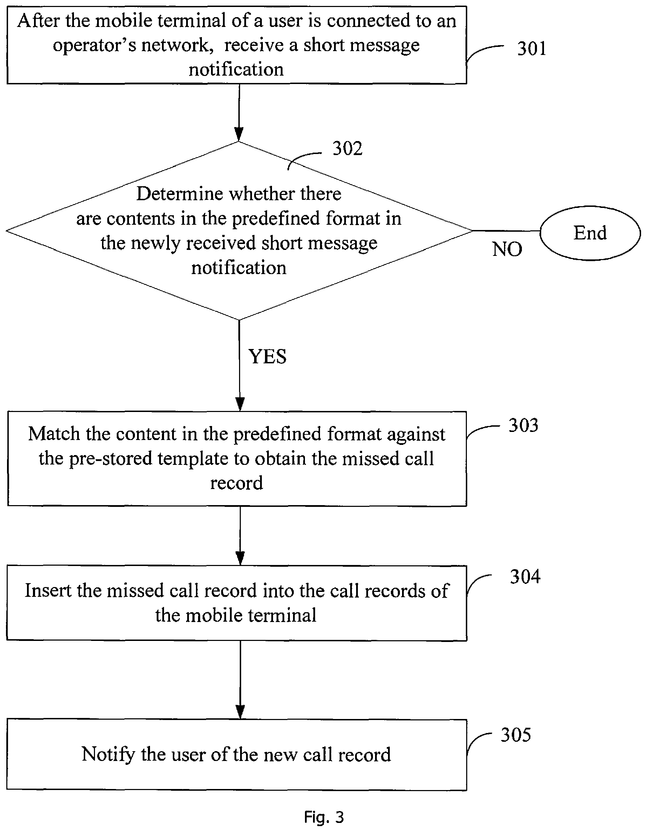

Fig. 3 is a flowchart showing a method for obtaining a call record according to another exemplary embodiment.

In step 301, after the mobile terminal of a user is connected to an operator's network, the mobile terminal can receive a short message notification.

For example, after the user subscribes the call reminder service of the China Mobile, if there is a missed call, the mobile terminal of the user may receive a call reminder short message from the China Mobile, the sender number of the short message may be "106581210" and the contents of the short message may be: "Shanghai Mobile provides call reminder service for you: telephone number 058107363 called your mobile phone at 13:35, July 22, 2016, please call back in time". For every area, the sender number of the call reminder short messages sent by the China Mobile is fixed, and the format of the contents of the short messages is fixed, and thus a short message template may be preset based on the fixed format, and after a short message is received, the short message is matched against the preset short message template to identify the number of the call.

In step 302, whether there are contents in the predefined format in the newly received short message notification is determined. If there are contents in the predefined format, step 303 is performed; otherwise, the flowchart ends.

In step 303, the content in the predefined format is matched against the pre-stored template to obtain the missed call record.

In step 304, the missed call record is inserted into the call records of the mobile terminal.

In step 305, the mobile terminal notifies the user of the new call record.

In the embodiment, after the mobile terminal of the user is connected to the operator's network again, the mobile terminal of the user can receive a new short message notification. The mobile terminal can identify a short message for notifying the call record from short messages, and obtain the missed call record by matching the identified short message against the pre-stored template. After the missed call record is obtained, the missed call record is inserted into the call records of the mobile terminal, and meanwhile the mobile terminal notifies the user of the missed call. The method automatically inserts the missed call records which indicate calls missed during the shutdown into the call records of the mobile terminal and notify the user of the missed calls. Thus, missing of important calls can be avoided, and thereby user experience can be improved.

Embodiments of devices, which are used for performing the methods according to embodiments of the present invention, will be described below.

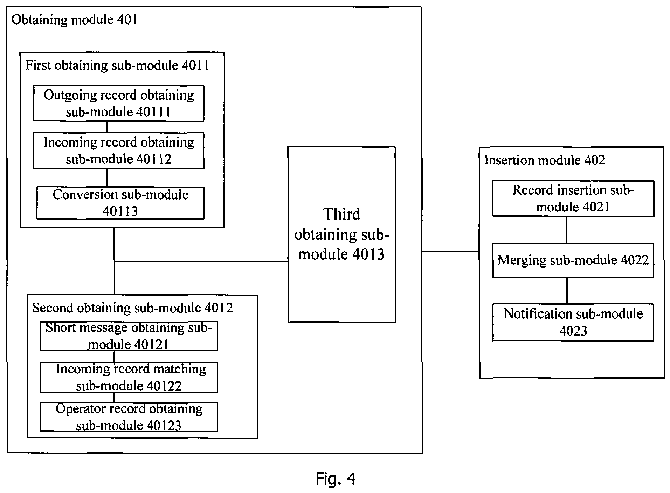

Fig. 4 is a block diagram showing a device for obtaining a call record according to an exemplary embodiment. The device can be realized as whole or a part of an electronic device by software, hardware or a combination thereof. As shown in Fig. 4, the device for obtaining a call record may comprise an obtaining module 401 and an insertion module 402.

The obtaining module 401 is configured to obtain a missed call record.

The insertion module 402 is configured to insert the missed call record into call records of the mobile terminal.

The obtaining module 401 may comprise any one of a first obtaining sub-module 4011, a second obtaining sub-module 4012, and a third obtaining sub-module 4013.

The first obtaining sub-module 4011 is configured to obtain the missed call record from a server.

The second obtaining sub-module 4012 is configured to obtain the missed call record from contents of a received short message.

The third obtaining sub-module 4013 configured to obtain the missed call record from an operator.

The first obtaining sub-module 4011 may comprise an outgoing record obtaining sub-module 40111, an incoming record obtaining sub-module 40112 and a conversion sub-module 40113.

The outgoing record obtaining sub-module 40111 is configured to obtain outgoing call records of a calling party from the server.

The incoming record obtaining sub-module 40112 is configured to obtain, from the outgoing call records of the calling party, an outgoing call record which indicates an outgoing call from the calling party to the terminal.

The conversion sub-module 40113 is configured to obtain the outgoing call record which indicates the outgoing call from the calling party to the terminal as the missed call record.

The second obtaining sub-module 4012 may comprise a short message obtaining sub-module 40121 and an incoming record matching sub-module 40122.

The short message obtaining sub-module 40121 is configured to obtain contents of the received short message in a predefined format.

The incoming record matching sub-module 40122 is configured to obtain the missed call record from the contents of the short message in the predefined format.

The second obtaining sub-module 4012 may comprise an operator record obtaining sub-module 40123.

The operator record obtaining sub-module 40123 is configured to obtain the missed call record from a short message notification received from an operator.

The insertion module 402 may comprise a record insertion sub-module 4021 and a merging sub-module 4022.

The record insertion sub-module 4021 is configured to insert the obtained missed call record into the call records of the mobile terminal according to a call time of the missed call.

The merging sub-module 4022 is configured to delete duplicates in the call records of the mobile terminal.

The insertion module 402 may further comprise a notification sub-module 4023.

The notification sub-module 40s3 is configured to notify a user of the missed call.

In the embodiment, when a mobile terminal is restarted or the state of the mobile terminal is changed from an offline state to an online state, the obtaining module obtains the missed call record, and the obtained missed call record is automatically inserted into call records of the mobile terminal. This is convenient for users to view records, and can avoid missing of important calls, and thereby improve user experience.

Embodiments of the present invention further provide a device for obtaining a call record, comprising:
a processor; and
a memory for storing instructions executable by the processor;
wherein the processor is configured to:
   obtain a missed call record; and
   insert the missed call record into call records of the mobile terminal.

According to a particular embodiment, the processor is configured to perform any one of:
obtaining the missed call record from a server;
obtaining the missed call record from contents of a received short message; and
obtaining the missed call record from an operator.

According to a particular embodiment, the processor is configured to:
obtain outgoing call records of a calling party from the server;
obtain, from the outgoing call records of the calling party, an outgoing call record which indicates an outgoing call from the calling party to the terminal; and
obtain the outgoing call record which indicates the outgoing call from the calling party to the terminal as the missed call record.

According to a particular embodiment, the processor is configured to:
obtain contents of the received short message in a predefined format; and
obtain the missed call record from the contents of the short message in the predefined format.

According to a particular embodiment, the processor is configured to:
obtain the missed call record from a short message notification received from an operator.

According to a particular embodiment, the processor is configured to:
insert the obtained missed call record into the call records of the mobile terminal according to a call time of the missed call; and
delete duplicates in the call records of the mobile terminal.

According to a particular embodiment, the processor is configured to:
after the missed call record is inserted into call records of the mobile terminal, notify a user of the missed call record.

With respect to the devices in the above embodiments, the specific manners for performing operations for individual modules therein have been described in detail in the embodiments regarding the methods, which will not be elaborated herein.

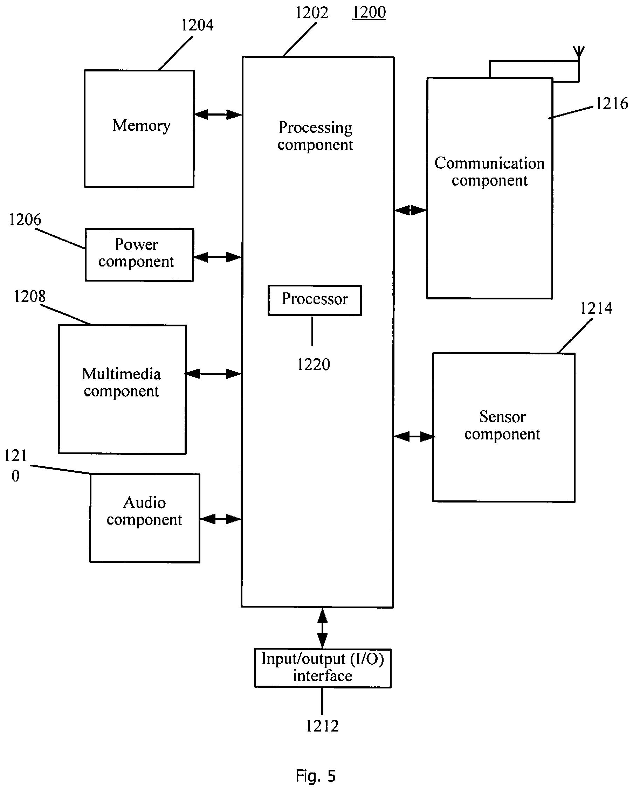

Fig. 5 is a block diagram showing a device 1200 for obtaining a call record according to an exemplary embodiment. The device may be comprised in a terminal device. For example, the device 1200 may be a mobile phone, a computer, a digital broadcast terminal, a messaging device, a gaming console, a tablet, a medical device, exercise equipment, a personal digital assistant, and the like.

The device 1200 may comprise one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the device 1200, such as the operations associated with display, telephone calls, data communications, camera operations, and recording operations. The processing component 1202 may comprise one or more processors 1220 to execute instructions to perform all or part of the steps in the above described methods. Moreover, the processing component 1202 may comprise one or more modules which facilitate the interaction between the processing component 1202 and other components. For instance, the processing component 1202 may comprise a multimedia module to facilitate the interaction between the multimedia component 1208 and the processing component 1202.

The memory 1204 is configured to store various types of data to support the operation of the device 1200. Examples of such data comprise instructions for any applications or methods operated on the device 1200, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the device 1200. The power component 1206 may comprise a power management system, one or more power sources, and any other components associated with the generation, management, and distribution of power in the device 1200.

The multimedia component 1208 comprises a screen providing an output interface between the device 1200 and the user. In some embodiments, the screen may comprise a liquid crystal display (LCD) and a touch panel (TP). If the screen comprises the touch panel, the screen may be implemented as a touch screen to receive input signals from the user. The touch panel comprises one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1208 comprises a front camera and/or a rear camera. The front camera and the rear camera may receive an external multimedia datum while the device 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 comprises a microphone ("MIC") configured to receive an external audio signal when the device 1200 is in an operation mode, such as a call mode, a recording mode, and a voice recognition mode. The received audio signal may be further stored in the memory 1204 or transmitted via the communication component 1216. In some embodiments, the audio component 1210 further comprises a speaker to output audio signals.

The I/O interface 1212 provides an interface between the processing component 1202 and peripheral interface modules, such as a keyboard, a click wheel, buttons, and the like. The buttons may comprise, but are not limited to, a home button, a volume button, a starting button, and a locking button.

The sensor component 1214 comprises one or more sensors to provide status assessments of various aspects of the device 1200. For instance, the sensor component 1214 may detect an open/closed status of the device 1200, relative positioning of components, e.g., the display and the keypad, of the device 1200, a change in position of the device 1200 or a component of the device 1200, a presence or absence of user contact with the device 1200, an orientation or an acceleration/deceleration of the device 1200, and a change in temperature of the device 1200. The sensor component 1214 may comprise a proximity sensor configured to detect the presence of nearby objects without any physical contact. The sensor component 1214 may also comprise a light sensor, such as a CMOS or CCD image sensor, for use in imaging applications. In some embodiments, the sensor component 1214 may also comprise an accelerometer sensor, a gyroscope sensor, a magnetic sensor, a pressure sensor, or a temperature sensor.

The communication component 1216 is configured to facilitate communication, wired or wirelessly, between the device 1200 and other devices. The device 1200 can access a wireless network based on a communication standard, such as WiFi, 2G, or 3G, or a combination thereof. In one exemplary embodiment, the communication component 1216 receives a broadcast signal or broadcast associated information from an external broadcast management system via a broadcast channel. In one exemplary embodiment, the communication component 1216 further comprises a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium comprising instructions, such as comprised in the memory 1204, executable by the processor 1220 in the device 1200, for performing the above-described methods. For example, the non-transitory computer-readable storage medium may be a ROM, a RAM, a CD-ROM, a magnetic tape, a floppy disc, an optical data storage device, and the like.

There is provided a non-transitory computer-readable storage medium, when instructions in the storage medium are executed by the processor in the above device 1200 (which can be comprised in a mobile terminal), the device 1200 is caused to perform a method for obtaining a call record, comprising:
obtaining a missed call record; and
inserting the missed call record into call records of the mobile terminal.

According to a particular embodiment, obtaining the missed call record comprises any one of:
obtaining the missed call record from a server;
obtaining the missed call record from contents of a received short message; and
obtaining the missed call record from an operator.

According to a particular embodiment, obtaining the missed call from the server comprises:
obtaining outgoing call records of a calling party from the server;
obtaining, from the outgoing call records of the calling party, an outgoing call record which indicates an outgoing call from the calling party to the terminal; and
obtaining the outgoing call record which indicates the outgoing call from the calling party to the terminal as the missed call record.

According to a particular embodiment, obtaining the missed call record from the contents of the received short message, comprises:
obtaining contents of the received short message in a predefined format; and
obtaining the missed call record from the contents of the short message in the predefined format.

According to a particular embodiment, obtaining the missed call record from the contents of the received short message, comprises:
obtaining the missed call record from a short message notification received from an operator.

According to a particular embodiment, inserting the missed call record into call records of the mobile terminal, comprises:
inserting the obtained missed call record into the call records of the mobile terminal according to a call time of the missed call; and
deleting duplicates in the call records of the mobile terminal.

According to a particular embodiment, after the missed call record is inserted into call records of the mobile terminal, the method further comprises:
notifying a user of the missed call record.

Other embodiments of the invention will be apparent to those skilled in the art from consideration of the specification and practice of the invention disclosed here. This application is intended to cover any variations, uses, or adaptations of the invention following the general principles thereof and comprising such departures from the present invention as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for obtaining a call record, performed by a mobile terminal, after the mobile terminal is restarted, comprising:
obtaining (101) a missed call record from a server; and
inserting (102, 204, 304) the missed call record into call records of the mobile terminal, wherein inserting (102, 204, 304) the missed call record into call records of the mobile terminal, comprises:
inserting the obtained missed call record into the call records of the mobile terminal according to a call time of the missed call; and
deleting duplicates in the call records of the mobile terminal,
**characterized in that**: before the obtaining step, a record obtaining message is sent to the server to obtain outgoing call records of contacts associated with the user of the mobile terminal, the record obtaining message comprising the starting and ending times of the shutdown of the mobile terminal of the user and the telephone number of the mobile terminal.

2. The method according to claim 1, wherein obtaining (101) the missed call record further comprises any one of:
obtaining the missed call record from contents of a received short message; and
obtaining the missed call record from an operator.

3. The method according to claim 2, wherein obtaining the missed call record from the server comprises:
obtaining outgoing call records of a calling party from the server;
obtaining, from the outgoing call records of the calling party, an outgoing call record which indicates an outgoing call from the calling party to the terminal; and
obtaining the outgoing call record which indicates the outgoing call from the calling party to the terminal as the missed call record.

4. The method according to claim 2 or 3, wherein obtaining the missed call record from the contents of the received short message, comprises:
obtaining contents of the received short message in a predefined format; and
obtaining the missed call record from the contents of the short message in the predefined format.

5. The method according to anyone of claims 2 to 4, wherein obtaining the missed call record from the contents of the received short message, comprises:
obtaining the missed call record from a short message notification received from an operator.

6. The method according to anyone of claims 1 to 5, wherein after the missed call record is inserted into call records of the mobile terminal, the method further comprises:
notifying a user of the missed call record.

7. A device for obtaining a call record, comprised in a mobile terminal, comprising:
an obtaining module (401) configured to obtain, after the mobile terminal is restarted, a missed call record;
a first obtaining sub-module (4011) configured to obtain the missed call record from a server; and
an insertion module (402) configured to insert the missed call record into call records of the mobile terminal,
wherein the insertion module (402) comprises:
a record insertion sub-module (4021) configured to insert the obtained missed call record into the call records of the mobile terminal according to a call time of the missed call; and
a merging sub-module (4022) configured to delete duplicates in the call records of the mobile terminal.
**characterized in that** the device is configured to, before obtaining the missed call record, send a record obtaining message to the server to obtain outgoing call records of contacts associated with the user of the mobile terminal, the record obtaining message comprising the starting and ending times of the shutdown of the mobile terminal of the user and the telephone number of the mobile terminal.

8. The device according to claim 7, wherein the obtaining module (401) further comprises any one of:
a second obtaining sub-module (4012) configured to obtain the missed call record from contents of a received short message; and
a third obtaining sub-module (4013) configured to obtain the missed call record from an operator.

9. The device according to claim 8, wherein the first obtaining sub-module (4011) comprises:
an outgoing record obtaining sub-module (40111) configured to obtain outgoing call records of a calling party from the server; and
an incoming record obtaining sub-module (40112) configured to obtain, from the outgoing call records of the calling party, an outgoing call record which indicates an outgoing call from the calling party to the terminal; and
a conversion sub-module (40113) configured to obtain the outgoing call record which indicates the outgoing call from the calling party to the terminal as the missed call record.

10. The device according to claim 8 or 9, wherein the second obtaining sub-module (4012) comprises:
a short message obtaining sub-module (40121) configured to obtain contents of the received short message in a predefined format; and
an incoming record matching sub-module (40122) configured to obtain the missed call record from the contents of the short message in the predefined format.

11. The device according to anyone of claims 8 to 10, wherein the second obtaining sub-module (4012) comprises:
an operator record obtaining sub-module (40123) configured to obtain the missed call record from a short message notification received from an operator.

12. A computer program which, when being executed on a processor of a mobile terminal, performs a method according to any one of claims 1 to 6.

## Patentansprüche

1. Verfahren zum Erlangen eines Anrufprotokolls, welches von einem mobilen Endgerät durchgeführt wird, nachdem das mobile Endgerät neu gestartet worden ist, umfassend:
Erlangen (101) eines Protokolls von Anrufen in Abwesenheit von einem Server, und
Einfügen (102, 204, 304) des Protokolls von Anrufen in Abwesenheit in Anrufprotokolle des mobilen Endgeräts, wobei das Einfügen (102, 204, 304) des Protokolls von Anrufen in Abwesenheit in Anrufprotokolle des mobilen Endgeräts umfasst:
Einfügen des erlangten Protokolls von Anrufen in Abwesenheit in die Anrufprotokolle des mobilen Endgeräts gemäß einer Anrufzeit des Anrufs in Abwesenheit und
Löschen von Duplikaten in den Anrufprotokollen des mobilen Endgeräts,
**dadurch gekennzeichnet, dass** vor dem Schritt des Erlangens eine Protokoll-Erlangungsnachricht an den Server gesendet wird, um Protokolle von ausgehenden Anrufen von Kontakten, die dem Benutzer des mobilen Endgeräts zugeordnet sind, zu erlangen, wobei die Protokoll-Erlangungsnachricht die Start- und Endzeiten des Abschaltens des mobilen Endgeräts des Benutzers und die Telefonnummer des mobilen Endgeräts umfasst.

2. Verfahren nach Anspruch 1, wobei das Erlangen (101) des Protokolls von Anrufen in Abwesenheit ferner ein Beliebiges umfasst von:
Erlangen des Protokolls von Anrufen in Abwesenheit aus einem Inhalt einer empfangenen Kurznachricht und
Erlangen des Protokolls von Anrufen in Abwesenheit von einem Betreiber.

3. Verfahren nach Anspruch 2, wobei das Erlangen des Protokolls von Anrufen in Abwesenheit von dem Server umfasst:
Erlangen von Protokollen von ausgehenden Anrufen einer anrufenden Partei von dem Server,
Erlangen, aus den Protokollen von ausgehenden Anrufen der anrufenden Partei, eines Protokolls von ausgehenden Anrufen, welches einen ausgehenden Anruf von der anrufenden Partei für das Endgerät angibt, und
Erlangen des Protokolls von ausgehenden Anrufen, welches den ausgehenden Anruf von der anrufenden Partei für das Endgerät angibt, als das Protokoll von Anrufen in Abwesenheit.

4. Verfahren nach Anspruch 2 oder 3, wobei das Erlangen des Protokolls von Anrufen in Abwesenheit aus dem Inhalt der empfangenen Kurznachricht umfasst:
Erlangen eines Inhalts der empfangenen Kurznachricht in einem vordefinierten Format und
Erlangen des Protokolls von Anrufen in Abwesenheit aus dem Inhalt der Kurznachricht in dem vordefinierten Format.

5. Verfahren nach einem der Ansprüche 2 bis 4, wobei das Erlangen des Protokolls von Anrufen in Abwesenheit aus dem Inhalt der empfangenen Kurznachricht umfasst:
Erlangen des Protokolls von Anrufen in Abwesenheit aus einer Kurznachrichtenmitteilung, die von einem Betreiber empfangen wird.

6. Verfahren nach einem der Ansprüche 1 bis 5, wobei, nachdem das Protokoll von Anrufen in Abwesenheit in Anrufprotokolle des mobilen Endgeräts eingefügt worden ist, das Verfahren ferner umfasst:
Benachrichtigen eines Benutzers über das Protokoll von Anrufen in Abwesenheit.

7. Vorrichtung zum Erlangen eines Anrufprotokolls, welche in einem mobilen Endgerät enthalten ist, umfassend:
ein Erlangungsmodul (401), das dazu ausgestaltet ist, ein Protokoll von Anrufen in Abwesenheit zu erlangen, nachdem das mobile Endgerät neu gestartet worden ist,
ein erstes Erlangungsteilmodul (4011), das dazu ausgestaltet ist, das Protokoll von Anrufen in Abwesenheit von einem Server zu erlangen, und
ein Einfügungsmodul (402), das dazu ausgestaltet ist, das Protokoll von Anrufen in Abwesenheit in Anrufprotokolle des mobilen Endgeräts einzufügen,
wobei das Einfügungsmodul (402) umfasst:
ein Protokoll-Einfügungsteilmodul (4021), das dazu ausgestaltet ist, das erlangte Protokoll von Anrufen in Abwesenheit gemäß einer Anrufzeit des Anrufs in Abwesenheit in die Anrufprotokolle des mobilen Endgeräts einzufügen, und
ein Zusammenführungsteilmodul (4022), das dazu ausgestaltet ist, Duplikate in den Anrufprotokollen des mobilen Endgeräts zu löschen,
**dadurch gekennzeichnet, dass** die Vorrichtung dazu ausgestaltet ist, vor Erlangen des Protokolls von Anrufen in Abwesenheit eine Protokoll-Erlangungsnachricht an den Server zu senden, um Protokolle von ausgehenden Anrufen von Kontakten, die dem Benutzer des mobilen Endgeräts zugeordnet sind, zu erlangen, wobei die Protokoll-Erlangungsnachricht die Start- und Endzeiten des Abschaltens des mobilen Endgeräts des Benutzers und die Telefonnummer des mobilen Endgeräts umfasst.

8. Vorrichtung nach Anspruch 7, wobei das Erlangungsmodul (401) ferner ein Beliebiges umfasst von:
einem zweiten Erlangungsteilmodul (4012), das dazu ausgestaltet ist, das Protokoll von Anrufen in Abwesenheit aus einem Inhalt einer empfangenen Kurznachricht zu erlangen, und
einem dritten Erlangungsteilmodul (4013), das dazu ausgestaltet ist, das Protokoll von Anrufen in Abwesenheit von einem Betreiber zu erlangen.

9. Vorrichtung nach Anspruch 8, wobei das erste Erlangungsteilmodul (4011) umfasst:
ein ausgehendes Protokoll-Erlangungsteilmodul (40111), das dazu ausgestaltet ist, Protokolle von ausgehenden Anrufen einer anrufenden Partei von dem Server zu erlangen, und
ein eingehendes Protokoll-Erlangungsteilmodul (40112), das dazu ausgestaltet ist, aus den Protokollen von ausgehenden Anrufen der anrufenden Partei ein Protokoll von ausgehenden Anrufen zu erlangen, welches einen ausgehenden Anruf von der anrufenden Partei für das Endgerät angibt, und
ein Konversionsteilmodul (40113), das dazu ausgestaltet ist, das Protokoll von ausgehenden Anrufen, welches den ausgehenden Anruf von der anrufenden Partei für das Endgerät angibt, als das Protokoll von Anrufen in Abwesenheit zu erlangen.

10. Vorrichtung nach Anspruch 8 oder 9, wobei das zweite Erlangungsteilmodul (4012) umfasst:
ein Kurznachrichten-Erlangungsteilmodul (40121), das dazu ausgestaltet, Inhalte der empfangenen Kurznachricht in einem vordefinierten Format zu erlangen, und
ein eingehendes Protokoll-Abgleichteilmodul (40122), das dazu ausgestaltet ist, das Protokoll von Anrufen in Abwesenheit aus dem Inhalt der Kurznachricht in dem vordefinierten Format zu erlangen.

11. Vorrichtung nach einem der Ansprüche 8 bis 10, wobei das zweite Erlangungsteilmodul (4012) umfasst:
ein Betreiberprotokoll-Erlangungsteilmodul (40123), das dazu ausgestaltet ist, das Protokoll von Anrufen in Abwesenheit aus einer Kurznachrichtenmitteilung zu erlangen, die von einem Betreiber empfangen wird.

12. Computerprogramm, welches bei Ausführung auf einem Prozessor eines mobilen Endgeräts ein Verfahren nach einem der Ansprüche 1 bis 6 durchführt.

## Revendications

1. Procédé d'obtention d'un enregistrement d'appel, mis en oeuvre par un terminal mobile, après le redémarrage du terminal mobile, comprenant les étapes ci-dessous consistant à :
obtenir (101) un enregistrement d'appel manqué à partir d'un serveur ; et
insérer (102, 204, 304) l'enregistrement d'appel manqué dans des enregistrements d'appels du terminal mobile, dans lequel l'étape d'insertion (102, 204, 304) de l'enregistrement d'appel manqué dans les enregistrements d'appels du terminal mobile comprend les étapes ci-dessous consistant à :
insérer l'enregistrement d'appel manqué obtenu dans les enregistrements d'appels du terminal mobile selon une heure d'appel de l'appel manqué ; et
supprimer des doublons dans les enregistrements d'appels du terminal mobile,
**caractérisé en ce que** : avant l'étape d'obtention, un message d'obtention d'enregistrement est envoyé au serveur en vue d'obtenir des enregistrements d'appels sortants de contacts associés à l'utilisateur du terminal mobile, le message d'obtention d'enregistrement comprenant les heures de début et de fin de l'arrêt du terminal mobile de l'utilisateur et le numéro de téléphone du terminal mobile.

2. Procédé selon la revendication 1, dans lequel l'étape d'obtention (101) de l'enregistrement d'appel manqué comprend en outre l'une quelconque des étapes ci-dessous consistant à :
obtenir l'enregistrement d'appel manqué à partir de contenus d'un message court reçu ; et
obtenir l'enregistrement d'appel manqué auprès d'un opérateur.

3. Procédé selon la revendication 2, dans lequel l'étape d'obtention de l'enregistrement d'appel manqué à partir du serveur comprend les étapes ci-dessous consistant à :
obtenir des enregistrements d'appels sortants d'un appelant à partir du serveur;
obtenir, à partir des enregistrements d'appels sortants de l'appelant, un enregistrement d'appel sortant qui indique un appel sortant de l'appelant vers le terminal ; et
obtenir l'enregistrement d'appel sortant qui indique l'appel sortant de l'appelant vers le terminal comme étant l'enregistrement d'appel manqué.

4. Procédé selon la revendication 2 ou 3, dans lequel l'étape d'obtention de l'enregistrement d'appel manqué à partir des contenus du message court reçu, comprend les étapes ci-dessous consistant à :
obtenir des contenus du message court reçu dans un format prédéfini ; et
obtenir l'enregistrement d'appel manqué à partir des contenus du message court dans le format prédéfini.

5. Procédé selon l'une quelconque des revendications 2 à 4, dans lequel l'étape d'obtention de l'enregistrement d'appel manqué à partir des contenus du message court reçu comprend l'étape ci-dessous consistant à :
obtenir l'enregistrement d'appel manqué à partir d'une notification de message court reçue en provenance d'un opérateur.

6. Procédé selon l'une quelconque des revendications 1 à 5, dans lequel, après l'insertion de l'enregistrement d'appel manqué dans les enregistrements d'appels du terminal mobile, le procédé comprend en outre l'étape ci-dessous consistant à :
notifier, à un utilisateur, l'enregistrement d'appel manqué.

7. Dispositif destiné à obtenir un enregistrement d'appel, compris dans un terminal mobile, comprenant :
un module d'obtention (401) configuré de manière à obtenir, après le redémarrage du terminal mobile, un enregistrement d'appel manqué ;
un premier sous-module d'obtention (4011) configuré de manière à obtenir l'enregistrement d'appel manqué à partir d'un serveur ; et
un module d'insertion (402) configuré de manière à insérer l'enregistrement d'appel manqué dans des enregistrements d'appels du terminal mobile ;
dans lequel le module d'insertion (402) comprend :
un sous-module d'insertion d'enregistrement (4021) configuré de manière à insérer l'enregistrement d'appel manqué obtenu dans les enregistrements d'appels du terminal mobile selon une heure d'appel de l'appel manqué ; et
un sous-module de fusion (4022) configuré de manière à supprimer des doublons dans les enregistrements d'appels du terminal mobile ;
**caractérisé en ce que** le dispositif est configuré de manière à, avant d'obtenir l'enregistrement d'appel manqué, envoyer un message d'obtention d'enregistrement au serveur en vue d'obtenir des enregistrements d'appels sortants de contacts associés à l'utilisateur du terminal mobile, le message d'obtention d'enregistrement comprenant les heures de début et de fin de l'arrêt du terminal mobile de l'utilisateur et le numéro de téléphone du terminal mobile.

8. Dispositif selon la revendication 7, dans lequel le module d'obtention (401) comprend en outre l'un quelconque parmi :
un deuxième sous-module d'obtention (4012) configuré de manière à obtenir l'enregistrement d'appel manqué à partir de contenus d'un message court reçu ; et
un troisième sous-module d'obtention (4013) configuré de manière à obtenir l'enregistrement d'appel manqué auprès d'un opérateur.

9. Dispositif selon la revendication 8, dans lequel le premier sous-module d'obtention (4011) comprend :
un sous-module d'obtention d'enregistrements d'appels sortants (40111) configuré de manière à obtenir des enregistrements d'appels sortants d'un appelant, à partir du serveur ; et
un sous-module d'obtention d'enregistrements d'appels entrants (40112) configuré de manière à obtenir, à partir des enregistrements d'appels sortants de l'appelant, un enregistrement d'appel sortant qui indique un appel sortant de l'appelant vers le terminal ; et
un sous-module de conversion (40113) configuré de manière à obtenir l'enregistrement d'appel sortant qui indique l'appel sortant de l'appelant vers le terminal comme étant l'enregistrement d'appel manqué.

10. Dispositif selon la revendication 8 ou 9, dans lequel le deuxième sous-module d'obtention (4012) comprend :
un sous-module d'obtention de message court (40121) configuré de manière à obtenir des contenus du message court reçu dans un format prédéfini ; et
un sous-module de mise en correspondance d'enregistrements d'appels entrants (40122) configuré de manière à obtenir l'enregistrement d'appel manqué à partir des contenus du message court dans le format prédéfini.

11. Dispositif selon l'une quelconque des revendications 8 à 10, dans lequel le deuxième sous-module d'obtention (4012) comprend :
un sous-module d'obtention d'enregistrements d'appels d'opérateur (40123) configuré de manière à obtenir l'enregistrement d'appel manqué à partir d'une notification de message court reçue en provenance d'un opérateur.

12. Programme informatique qui, lorsqu'il est exécuté sur un processeur d'un terminal mobile, met en oeuvre un procédé selon l'une quelconque des revendications 1 à 6.
